# EUROPEAN PATENT APPLICATION

(11) **EP 2 596 705 A1**
(43) Date of publication of application: **29.05.2013**
(21) Application number: 12194685.9
(22) Date of filing: 28.11.2012
(51) Int. Cl.: A23L 2/56, A23L 1/22

(54) **Stable clear flavor compositions**

(30) Priority: 28.11.2011 US 201161564098 P
(71) Applicant: Poulsen, Mauricio Leonardo, Skillman, NJ 08858 (US); Healy, Dennis Michael, Englishtown, NJ 07726 (US); Harada, Julian Nobumassa, 05417-020 San Paulo (BR); Vaccari, Daniel, 05143-240 Sao Paulo (BR); Da Silva, Silvio Estevam, 1631 Pilar - Buenos Aires (AR)
(72) Inventor: Poulsen, Mauricio Leonardo, Skillman, NJ 08858 (US); Healy, Dennis Michael, Englishtown, NJ 07726 (US); Harada, Julian Nobumassa, 05417-020 San Paulo (BR); Vaccari, Daniel, 05143-240 Sao Paulo (BR); Da Silva, Silvio Estevam, 1631 Pilar - Buenos Aires (AR)
(74) Representative: Lawrence, John

(57) **Abstract**

This invention relates to a process that solubilizes flavor oils to produce clear beverages in the absence of lecithin.

## Description

### Introduction

This application claims benefit from U.S. provisional application Serial No. 61/564,098 filed November 28, 2011, the contents of which are incorporated herein by reference in their entirety.

### Field of the Invention

The following invention provides stable clear flavor compositions and provides process that solubilizes essential oils to produce clear beverages in the absence of lysolecithin.

### Background of the Invention

It is often desirable to incorporate functional substances, such as flavorings and the like, in foods. Unfortunately, incorporation of functional substances into foods is often problematic. In particular, it is difficult to provide a stable formulation which also readily releases the functional substance when desired. Either the formulation is not stable enough or it is too stable and does not release the functional substance when desired. These problems often become more acute if the functional substance is not soluble in the chosen carrier medium. Also, many functional substances are in the form of precursors which are soluble in one medium as precursors but are soluble in another medium in operative form. Usually it is not possible to simply mix the various substances since the resulting formulations are not sufficiently stable. These stability problems become even more acute with volatile substances like aromas.

Many flavoring agents in beverage preparation are essential oils that are generally water insoluble. The common flavors such as orange, lemon and grapefruit have limited solubility in water. However, these flavors are well received by the consumers due to desirable aroma and flavor, particularly in beverages.

There are several industrial practices to introduce these oils into water. A major technique is to wash/extract the essential oil with a water-miscible solvent to remove the bulk of water insoluble components. In this washing process, the water soluble or polar components of the oil are extracted and this extract can be used to create clear beverages. However, this process does not preserve the full aroma and flavor of the essential oil, and the "freshness" of flavors such as those provided by citrus oils is reduced. Another common technique used is to formulate the essential oils into microemulsions.

To deal with these problems and other problems, much emphasis has been placed in recent times on microemulsions since these formulations are thermodynamically stable. For example, the formulation of flavors into micro emulsions has been suggested in U.S. Pat. No. 4,835,002. However the microemulsions described in this patent require the use of surfactants and alcohols in order for them to form. However the present trend is to reduce the use of these sorts of ingredients in foodstuffs. The clear flavor compositions of the present invention allows for you to use less surfactant that may be associated with an aftertaste.

It has been surprisingly found that a stable clear emulsion comprising an oil soluble flavor and a sucrose fatty ester can be prepared in the absence of lysolecithin. In addition to providing superior oil solubilization properties, the stable clear flavors prepared according to this invention deliver a high yield of about 100%. The stable clear flavors prepared according to this invention deliver the complete composition of the starting flavor, maintains the same organoleptic characteristics and provides an enhanced mouthfeel. This is achieved because there is no washing steps and no loss of the flavor. The last point makes for an excellent cost-in-use option alternative, as opposed to a more expensive, less efficient washed extract.

### Summary of the Invention

One embodiment of the invention provides a stable clear flavor composition which contains a flavor, surfactants, emulsifiers and sugars but does not contain lysolecithin. The stable clear flavor composition may can be added to a beverage to provide a transparent drink.

Another embodiment of the invention provides a stable clear flavor composition which contains a flavor, surfactants, emulsifiers and sugar-free sweeteners but does not contain lysolecithin. The stable clear flavor may be added to a beverage to provide a sugar-free transparent drink.

Another embodiment of the invention provides a beverage with a pH from about 2 to about 8 that contains the stable clear flavor composition of the invention. The stable clear flavor surfactant may be selected from, but not limited to, a sucrose fatty ester but does not contain lysolecithin. The beverage may be which may be carbonated, non-carbonated, concentrated, syrups, ready-to-drink, alcoholic, non-alcoholic beverages, oral care products, sweetened or unsweetened, acidified or not acidified.

### Detailed Description

It has now been shown that the inclusion of a stable clear flavor system comprising an oil soluble flavor prepared according to the present invention can be incorporated into a beverage and provide a transparent drink. It has been found that a stable clear emulsion comprising an oil soluble flavor and a sucrose fatty ester can be prepared in the absence of lysolecithin. In addition to providing superior oil solubilization properties, the emulsions prepared according to this invention deliver a high loading of about 100% of the starting flavor oil and provides an enhanced mouthfeel. The last point makes for an excellent cost-in-use option alternative, as opposed to a more expensive, less efficient washed extract.

It is an object of the invention to provide an improved process for incorporating flavor oils into clear beverages. In the process, an emulsifier or a blend of emulsifiers can be employed to achieve a clear beverages flavored with flavor components and all flavor compositions such as but not limited to citrus blends, orange, lemon, lime, grapefruit, basil,origanum, tarragon, tea, coffee, smoke, tropical fruits, orchad fruits, beef, chicken, berries,mints, etc The flavor oils can be single ingredients or may contain a formulation comprising many flavor ingredients that are selected from but not limited to mixtures of natural flavor oils, natural and synthetic chemicals.

For the purpose of the invention stable means the beverage transparency is maintained during the life of the product including no flocculation, formation of crystals, sedimentations, oil ring formation, no clouding or hazing and clear means optically clear and transparent for the purposes of this invention means that you can see through the beverage.

For the purpose of this invention the beverages using this flavor solution should have transparency NTU above about 15 would be considered hazy and not transparent. A most preferred range is from about 0 to about 10, more preferred is from about 0 to about 5 and more preferred from about 0 to about 2. Particle size of the flavor solution is an indicator of stability so under 300 nm, 200 nm and 150 nm stable and clear.

NTU is Nephelometric Turbidity Units (NTU) specified by United States Environmental Protection Agency is a special case of FTU, where a white light source and certain geometrical properties of the measurement apparatus are specified. (Sometimes the alternate form "nephelos turbidity units" is used).

It is an object of the invention is to provide a stable and transparent drink comprising a flavor composition comprising a flavor, a sucrose fatty acid ester wherein said beverage or beverage concentrate has a pH of from about 2 to about 8 and without lysolecithin.

The stable and transparent drink of the present invention may be non-carbonated transparent drink and have a pH from about 2 to about 8.

In another embodiment of the invention a stable and transparent drink which is an carbonated is provided pH about 2 to about 8.

### Flavors

Flavors contemplated by the present invention include any liquid flavoring which is of food acceptable quality. The flavor may comprise essential oils, synthetic flavors, or mixtures thereof including but not limited to oils derived from plants and fruits such as lemon, berry, orange, grapefruit, tangerine, lime, kumquat, mandarin, bergamot, citrus oils, fruit essences, peppermint oil, spearmint oil, clove oil, oil of wintergreen, anise, and the like. Artificial flavoring components are also contemplated by the present invention.

Such conventional flavoring materials include saturated fatty acids, unsaturated fatty acids and amino acids; alcohols including primary and secondary alcohols, esters, carbonyl compounds including ketones, other than the dienalkylamides of our invention and aldehydes; lactones; other cyclic organic materials including benzene derivatives, acyclic compounds, heterocyclics such as furans, pyridines, pyrazines and the like; sulfur-containing compounds including thiols, sulfides, disulfides and the like; proteins; lipids, carbohydrates; so-called flavor potentiators such as monosodium glutamate; magnesium glutamate, calcium glutamate, guanylates and inosinates; natural flavoring materials such as hydrolyzates, cocoa, vanilla and caramel; essential oils and extracts such as anise oil, clove oil and the like and artificial flavoring materials such as vanillin, ethyl vanillin and the like.

Specific preferred flavor adjuvants include but are not limited to the following: anise oil; ethyl-2-methyl butyrate; vanillin; cis-3-heptenol; cis-3-hexenol; trans-2-heptenal; butyl valerate; 2,3-diethyl pyrazine; methyl cyclo-pentenolone; benzaldehyde; valerian oil; 3,4-dimethoxy-phenol; amyl acetate; amyl cinnamate; γ-butyryl lactone; furfural; trimethyl pyrazine; phenyl acetic acid; isovaleraldehyde; ethyl maltol; ethyl vanillin; ethyl valerate; ethyl butyrate; cocoa extract; coffee extract; peppermint oil; spearmint oil; clove oil; anethol; cardamom oil; wintergreen oil; cinnamic aldehyde; ethyl-2-methyl valerate; γ-hexenyl lactone; 2,4-decadienal; 2,4-heptadienal; methyl thiazole alcohol (4-methyl-5-β-hydroxyethyl thiazole); 2-methyl butanethiol; 4-mercapto-2-butanone; 3-mercapto-2-pentanone; 1-mercapto-2-propane; benzaldehyde; furfural; furfuryl alcohol; 2-mercapto propionic acid; alkyl pyrazine; methyl pyrazine; 2-ethyl-3-methyl pyrazine; tetramethyl pyrazine; polysulfides; dipropyl disulfide; methyl benzyl disulfide; alkyl thiophene; 2,3-dimethyl thiophene; 5-methyl furfural; acetyl furan; 2,4-decadienal; guiacol; phenyl acetaldehyde; β-decalactone; d-limonene; acetoin; amyl acetate; maltol; ethyl butyrate; levulinic acid; piperonal; ethyl acetate; n-octanal; n-pentanal; n-hexanal; diacetyl; monosodium glutamate; monopotassium glutamate; sulfur-containing amino acids, e.g., cysteine; hydrolyzed vegetable protein; 2-methylfuran-3-thiol; 2-methyldihydrofuran-3-thiol; 2,5-dimethylfuran-3-thiol; hydrolyzed fish protein; tetramethyl pyrazine; propylpropenyl disulfide; propylpropenyl trisulfide; diallyl disulfide; diallyl trisulfide; dipropenyl disulfide; dipropenyl trisulfide; 4-methyl-2-[(methyl-thio)-ethyl]-1,3-dithiolane; 4,5-dimethyl-2-(methylthiomethyl)-1,3-dithiolne; and 4-methyl-2-(methylthiomethyl)-1,3-dithiolane. These and other flavor ingredients are provided in U.S. Patent Nos. 6,110,520 and 6,333,180.

Those skilled in the art will recognize that natural and artificial flavors may be combined in any sensorally acceptable blend. All such flavors and blends are contemplated by the present invention.

### Surfactants and Emulsifiers

According to the present invention wide variety of emulsifiers may be used in the process, such as but not limited to the following emulsifiers: Ionic Salts of fatty acids such as myristic acid, palmitic acid, stearic acid, oleic acid monoglyceride ester of diacetyltartaric acid Diglyceride ester of diacetyltartaric acid Monoglyceride ester of citric acid and salts thereof Diglyceride ester of citric acid Monoglyceride ester of lactic acid Diglyceride ester of lactic acid Dioctyl sodium sulfosuccinate Monoglyceride ester of phosphoric acid Diglyceride ester of phosphoric Non ionic Polysorbates Sorbitan esters of myristic acid Sorbitan ester of palmitic acid Sorbitan ester of stearic acid Sorbitan ester of oleic acid Polyglycerol esters of myristic acid Polyglycerol esters of palmitic acid Polyglycerol esters of stearic acid Polyglycerol esters of oleic acid Monoglyceride esters of myristic acid Monoglyceride esters of palmitic acid Monoglyceride esters of stearic acid Monoglyceride esters of oleic acid Diglyceride esters of myristic acid Diglyceride esters of palmitic acid Diglyceride esters of stearic acid Diglyceride esters of oleic acid (ethoxy).sub.n monoglyceride esters of myristic acid (ethoxy).sub.n monoglyceride esters of palmitic acid (ethoxy).sub.n monoglyceride esters of stearic acid (ethoxy).sub.n monoglyceride esters of oleic acid (ethoxy).sub.n diglyceride esters of myristic acid (ethoxy).sub.n diglyceride esters of palmitic acid (ethoxy).sub.n diglyceride esters of stearic acid (ethoxy).sub.n diglyceride esters of oleic acid Sucrose ester of lauric acid Sucrose ester of myristic acid Sucrose ester of palmitic acid Sucrose ester of stearic acid Sucrose ester of oleic acid Propylene glycol ester of lauric acid Propylene glycol ester of myristic acid Propylene glycol ester of palmitic acid Propylene glycol ester of stearic acid Propylene glycol ester of oleic acid Modified starches such as sodium octenyl succinate starch, acetylated distarch phosphate, hydroxypropyl starch and oxidized starch where n is a whole number from 10 to 30.

Materials like Propyleneglycol, triacetin , benzyl alcohol, benzyl benzoate, vegetable oils, may optionally be used to optimize the process.

Clear beverages can be obtained when only sucrose esters are employed as emulsifiers. The composition of flavor oils is highly dependent on its origin, species and processing history. Furthermore, blending of oils is common so as to achieve a particular flavor profile. Thus this solubilization process should also be robust as to cater to differences in flavor oils. Due to diversity in the range of sucrose esters in terms of fatty acid chain length and degree of esterification, adjustments in the sucrose ester blend has been found to provide a quick way of customization to different oils.

### Additional Ingredients

According to this invention, additional ingredients such astocopherol, butylated hydroxyanisole, butylated hydroxytoluene, rosemary oil or other lipophilic substances maybe added to the flavor oil for stabilization. Depending on the oil, common weighting agents such as sucrose acetate isobutyrate, mct oil, vegetable oil, brominated vegetable oil and xanthan gum can also be added to the oil to enhance emulsion stability in the concentrate or beverage.

### Process

According to one embodiment of the invention the clear flavor composition is provided comprising the steps of combining surfactants and an emulsifier under high shear mixing until the emulsifier is dissolved and an aqueous solution, adding the flavor oil into the combination of surfactants and emulsifier with a high shear mixer to form a emulsion with or without homogenizing the blend to form a flavor concentrate. According to one embodiment of the invention the clear flavor composition may be prepared by dissolving the emulsifier in water. Preferred emulsifiers are selected from but not limited to sucrose monoesters, diacetyl tartaric acid ester of mono-diglycerides and combination thereof.

A combination of solvents, such as propylene glycol, glycerol, benzyl alcohol, triacetin, ethanol and isopropanol, and water may optionally be used to dissolve the emulsifier. Furthermore, depending on the emulsifier/emulsifier system used, heat may be applied to facilitate dissolution.

To prepare the clear flavor solution of the present invention is prepared by mixing solvents (add sugars to the solvent) and then adding an emulsifier under high shear and dissolved in to the solvent mixture to form a solution and then the flavor components are added to the solution under high shear mixing to form an emulsion.
A sucrose monoester is then added to the mixture of emulsifier and solvents with high sheer mixing.

For a sweetened beverage sugars, saccharides and sugar alcohols may be added to the emulsifier system. Sugars and sugar derivatives such as but not limited to have been found to be effective: sucrose, fructose, glucose, sorbitol, xylitol, mannitol, glycerol, corn syrup, high fructose corn syrup, fruit concentrates and syrups, dextrose, vegetable concentrates and syrups, plant extracts, stevia, artificial high potency sweeteners and mixtures thereof. The emulsifiers may also be dry mixed with a sweetener such as sucrose and then dissolved. In one embodiment when sugars are employed they may be first dissolved in water and then added to the mixture of emulsifier, solvent and sucrose monoester.

In the next step the flavor oil is added to the emulsifier solution and an emulsion is generated under high shear mixing. Depending on the flavor oil specific emulsifiers may be employed such as but not limited to, diacetyl tartaric acid ester of mono-diglycerides, which is then added to the flavor oil and mixed until dissolved. The combination of emulsifier solution and flavor oil is then combined with high shear mixing for as long as necessary to form an emulsion.

The emulsion may be further processed in a homogenizer and the homogenization protocol depends on the flavor oil used. The use of the homogenizer is optional. Typically, three one to five cycles at or more cycles at a range of 1500/500psi to 23,000/1,000psi about 4000/800 psi are sufficient or two or more passes on a high pressure homogenizer at about 7500/500 psi. Homogenizers are commercially available from Niro Denmark or APV/Gualin/Rannie-SPX. After homogenization, the emulsion concentrate is diluted to the desired flavor loading in the beverage.

Depending on the nature of flavor oil, clear beverages may not be obtained after dilution of the flavor concentrate.

The ratio of flavor oil to emulsifier loading varies with the type of flavor oil used. For an flavor base the ratio is about 2:1, more preferred 3:1 most preferred 4:1 and 5:1 is most preferred depending on the system when emulsifier sucrose monoester, monopalmitate is used. The adjustment of the levels of emulsifier, solvent and flavor on the loading ratios may be necessary to achieve clarity depending on the flavor oil or oils or emulsifier used.

The stable clear flavor composition contains about 0.0001% to about 40%, more preferable from about 0.001% to about 20%, even more preferably from about 0.01% to about 10% and most preferred to 0.1% to 7% and then that translates into 150ppm of oil delivered in the beverage 25 to 250ppm to be flavor active delivered to the final beverage.

The clear flavor composition may be stored for later dilution up to 24 months. Storage can involve the addition of thickeners and stabilizers. Another alternative is to dry the concentrate into a powder. Examples of possible drying techniques are spray drying and freeze drying. Finally, the emulsion concentrate is diluted into the beverage to achieve the desired flavor loading and pasteurized.

The invention is described in greater detail by the following non-limiting examples.

### Example 1

The following is a comparative example between a sweetened sample containing lecithin and a sample that does now contain lecithin. Lemon Flavor commercially available from IFF.

### Sample 1 - Lemon with No lecithin- clear

### Sample 2 - Lemon with Lecithin - Broken / Failed

### Sample 1- No Lecithin

| Experiment # | | Lemon Flavor |
|---|---|---|
| Water Phase | Sugar | 344 |
| | Water | 259 |
| | Glycerine | 250 |
| | Propylene glycol | 100 |
| | Sucrose Monopalmitate P90 Compass Foods | 15 |
| Oil Phase | diacetyl tartaric acid ester of mono-diglycerides | 2 |
| | Lemon Flavor / Oil | 30 |
| Total | | 1000 |
| Homogenization pressure | | 3 times at 800/4000 psi |
| Visual aspect of neat (broken, clear or cloud) | | clear |
| Particle size (nm) "after 48h" | | 14.90 |

Particle size is an indicator of stability so under 300 nm, 200 nm and 150 nm stable and clear

### Sample 2 with Lecithin

| | | GW15 |
|---|---|---|
| Experiment # | | Lemon Fl. |
| Water Phase | Sugar Fruit Gran | 400.0 |
| | Water | 404.5 |
| | Propylene glycol | 150.0 |
| | Sucrose Monopalmitate | 15.0 |
| Oil Phase | Lecithin | 0.5 |
| | Flavor / Oil | 30.0 |
| Total | | 1000.0 |
| Homogenization pressure | | 3 times at 800/4000 psi |
| Visual aspect of neat (broken, clear or cloud) | | broken |
| Particle size (nm) "after 48h" | | # |

Particle size was not measured because visibly the formula was broken.

### Example 2

The following Example demonstrates a successful emulsion in sugar-free that has no lecithin.

| Experiment # | | Lemon Flavor (commercially available) |
|---|---|---|
| Water Phase | Sorbitol 70% | 605 |
| | Glycerine | 250 |
| | Propylene Glycol | 100 |
| | Sucrose Monopalmitate P90 | 15 |
| | Flavor / Oil | 30 |
| Total | | 1000 |
| Homogenization pressure | | 3 times at 800/4000 psi |
| Visual aspect of neat (broken, clear or cloud) | | clear |
| Particle size (nm) "after 48h" | | 91.59 |

## Claims

1. A stable clear flavor composition comprising a flavor and an emulsifier with the proviso the composition does not contain lysolecithin.

2. The stable clear flavor composition of claim 1 wherein the emulsifier is selected from the group consisting of a sucrose monoester, diacetyl tartaric acid ester of mono-diglycerides and mixtures thereof.

3. A stable and transparent drink comprising the stable clear flavor composition of claim 1.

4. The stable and transparent drink of claim 3, wherein the emulsifier is selected from the group consisting of a sucrose monoester, diacetyl tartaric acid ester of mono-diglycerides and mixtures thereof.

5. The stable and transparent drink of claim 3 or claim 4, which has a pH from about 2 to about 8.

6. The stable and transparent drink as claimed in claim 3 or claim 4 or claim 5, which is a non-carbonated drink.

7. The stable and transparent drink as claimed in claim 1, or claim 2, or claim 3, or claim 4, or claim 5, or claim 6 which is a carbonated drink.

8. The stable and transparent drink as claimed in claim 1, or claim 2, or claim 3 or any of claims 4 to 7, which is a carbonated transparent drink.

9. A process for preparing a stable clear flavor solution comprising the steps of: combining surfactants and an emulsifier under high shear mixing until the emulsifier is dissolved to form an aqueous solution, adding the flavor oil into the aqueous solution with a high shear mixer to form an emulsion and homogenizing the emulsion to form a flavor concentrate.

10. The process according to claim 9, wherein the emulsifier comprises a mixture of emulsifiers.

11. The process according to claim 9 or claim 10 wherein the emulsifier is selected from the group consisting of a sucrose monoester, diacetyl tartaric acid ester of mono-diglycerides and mixtures thereof.

12. The process according to claim 9 or claim 10, or claim 11, wherein the amount of emulsifier in the first emulsion ranges from about 0.1 to about 30% weight by volume.

13. The process according to claim 9, claim 10, or claim 11 or claim 12 wherein the aqueous solution further contains saccharides and/or sugar alcohols selected from the group consisting of sucrose, fructose, glucose, sorbitol, xylitol, mannitol, glycerol and mixtures thereof.

14. The process according to claim 9 or claim 10, or any of claims 11 to 13 wherein the flavor oil in the emulsion ranges from about 0.2 to about 30% weight by volume.

15. The process according to claim 9, or claim 10, or any of claims 11 to 14 wherein the flavor oil is selected from the group consisting of lemon, berry, orange, grapefruit, tangerine, lime, kumquat, mandarin, bergamot, citrus oils, fruit essences, peppermint oil, spearmint oil, clove oil, oil of wintergreen, anise and mixtures thereof.

16. The process according to claim 9 or claim 10, or any of claims 11 to 15, wherein the flavor oil also contains synthetic flavorings.

17. A beverage comprising the stable clear flavor composition prepared according to the process according to claim 10, or any of claims 9 to 16, wherein the beverage contains from about 0.002 to about 0.02% weight by weight flavor oil.

18. The beverage of claim 17, wherein the pH of the beverage ranges from about 2 to 8; or
a beverage comprising the clear flavor composition prepared according to the process according to claim 10 or any of claims 9 to 16, wherein the pH of the beverage ranges from about 2 to 8.
